# EUROPÄISCHE PATENTSCHRIFT

(11) **EP 0 881 399 B1**
(45) Veröffentlichungstag und Bekanntmachung des Hinweises auf die Patenterteilung: **29.08.2001**
(21) Anmeldenummer: 98108685.3
(22) Anmeldetag: 13.05.1998
(51) Int. Cl.: F16B 13/14

(54) **Dübel mit einer Dübelhülse**
Dowel with a dowel sleeve
Cheville avec un manchon à cheville

(30) Priorität: 16.05.1997 DE 19720579
(43) Veröffentlichungstag der Anmeldung: 02.12.1998
(73) Patentinhaber: Adolf Würth GmbH & Co. KG, 74653 Künzelsau (DE)
(72) Erfinder: Humm, Siegfried, 74214 Schöntal-Westernhausen (DE); Wieland, Achim, 74211 Leingarten (DE)
(74) Vertreter: Patentanwälte Ruff, Wilhelm, Beier, Dauster & Partner

(56) Entgegenhaltungen:
- EP-A- 0 738 835
- DE-U- 29 606 215
- GB-A- 1 405 083
- US-A- 4 893 974

## Beschreibung

Die Erfindung geht aus von einem Dübel mit einer Dübelhülse und einem zum Einsetzen in diese Hülse ausgebildeten Verankerungselement.

Dübel dieser Art dienen dazu, das Verriegelungselement, beispielsweise einen Schraubbolzen, mit Hilfe einer aushärtenden Masse in einem Mauerwerk oder dergleichen zu verankern. Dabei erfolgt die Verankerung durch Aushärten der Masse sowohl zwischen dem Verankerungselement und der Dübelhülse als auch zwischen der Dübelhülse und dem Dübelloch. Beim Aushärten der Masse entsteht eine formschlüssige Verbindung zwischen dem Verankerungselement, der Dübelhülse und der Wand des Dübellochs.

Dübel dieser Art finden u. a. auch Anwendung bei Hohlkammersteinen. Die aushärtende Masse wird in die bereits in das Dübelloch eingesetzte Hülse eingespritzt oder eingepreßt, und anschließend wird das Verankerungselement eingeschoben oder eingeschlagen.

Bei dem Einsetzen des Verankerungselements wird die Masse aus der Dübelhülse durch Öffnungen nach außen gepreßt und gelangt dort in den Zwischenraum zwischen der Dübelhülse und dem Dübelloch. Es hat sich nun herausgestellt, daß dabei ein großer Teil der später aushärtenden Masse im Bereich des Bodens des Dübellochs angesammelt wird, wo die Masse dann zur Verankerung kaum beiträgt. Dies führt zu einer verringerten Haltekraft des Dübels.

Es ist bereits versucht worden, die Haltekraft von Dübeln dieser Art zu verbessern. Eine Beispiel ist der Dübel nach DE 195 14 529.

Weiterhin bekannt ist ein Maueranker (DE 70 21 545 U), bei dem in der Hülle Öffnungen vorhanden sind, durch die der Haftstoff nach außen treten kann.

Weiterhin ist ein Dübel bekannt (GB-A 1405083), bei dem an dem in das Ende des Bohrlochs gerichteten Ende radiale Kanäle und vor diesen eine Dichtlippe vorhanden ist, die verhindert, dass der aus den radialen Bohrungen austretende Klebstoff weiter in das Innere des Bohrlochs gelangt.

Am gegenüberliegenden Ende des Dübels kann ebenfalls eine radiale Bohrung mit einer Dichtlippe vorhanden sein. Die Dichtlippen verlaufen über einen geschlossenen Umfang des Dübels und sind so ausgebildet, dass sie die Bohrungswand berühren.

Der Erfindung liegt die Aufgabe zugrunde, einen Dübel bzw. eine Dübelhülse der eingangs genannten Art zu schaffen, mit deren Hilfe eine verbesserte Befestigung mit erhöhter Haltekraft erreicht werden kann.

Zur Lösung dieser Aufgabe schlägt die Erfindung einen Dübel bzw. eine Dübelhülse mit den im Anspruch 1 genannten Merkmalen vor. Weiterbildungen der Erfindung sind Gegenstand von Unteransprüchen.

Durch die an der Dübelhülse vorgesehenen Leitmittel wird es möglich, dafür zu sorgen, daß die beim Einsetzen des Verankerungselements durch die Öffnungen nach außen tretende Masse genau dorthin gelenkt wird, wo sie für das Halten des Dübels besonders geeignet ist. Insbesondere bei Hohlkammersteinen kann dafür gesorgt werden, daß die Klebemasse dort konzentriert wird, wo keine Hohlkammern vorhanden sind, um das Wegfließen der Masse zu verhindern. Zusätzlich kann durch die Umlenkung der aus den Öffnungen austretenden Klebemasse dafür gesorgt werden, daß die einzelnen sich bildenden Stränge außerhalb der Dübelhülse wieder vermischt werden, so daß auch hierdurch ein vergrößertes Halten gegeben wird.

Insbesondere ist zur Verwirklichung der Leitmittel vorgesehen, dass die Leitmittel Leitschaufeln aufweisen, die schräg gegenüber der Längsachse der Dübelhülse verlaufen. Die Leitschaufeln lassen sich bei der Herstellung der Dübelhülse sehr einfach mit herstellen, sie können insbesondere einstükkig mit der Dübelhülse sein. Dies gilt sowohl bei Herstellung der Dübelhülse aus Metall als auch bei einer Herstellung aus Kunststoff. Die Leitschaufeln können beispielsweise gerade durch die Teile gebildet werden, die zur Bildung der Öffnungen aus der Wand der Dübelhülse herausgebogen werden.

Die Leitschaufeln können beispielsweise mindestens teilweise in dem Innenraum der Dübelhülse angeordnet sein. Besonders günstig ist es jedoch, wenn sie über den Außenumfang bzw. die äußere Mantelfläche der Dübelhülse vorstehen. Es besteht dann nicht die Gefahr, daß sie beim Einschieben des Verankerungselements oder sogar beim Einpressen der Masse beschädigt oder verbogen werden.

Insbesondere kann vorgesehen sein, daß die Öffnungen der Dübelhülse einen rechteckigen Querschnitt aufweisen.

Insbesondere kann vorgesehen sein, daß die Dübelhülse aus Kunststoff besteht und an ihrer Außenseite abwechselnde Vorsprünge und Rücksprünge aufweist. Damit wird dann nach dem Aushärten der Klebemasse auch eine formschlüssige Festlegung der Dübelhülse erreicht.

Es kann vorgesehen sein, daß der Übergang zwischen den die Vorsprünge bildenden Ringbereichen und den die Rücksprünge bildenden Ringbereichen kegelförmig ausgebildet ist.

Erfindungsgemäß kann vorgesehen sein, daß auch in diesen Kegelbereichen Öffnungen mit Leitschaufeln angeordnet sind.

Zur weiteren Verbesserung der Haltekraft kann vorgesehen sein, daß die Löcher einen über die Länge der Dübelhülse sich ändernden Querschnitt aufweisen, so daß die Löcher beispielsweise im Bereich des Bodens des Dübellochs kleiner sind als im vorderen Bereich. Auch auf diese Weise läßt sich eine Leiteinrichtung zum gezielten Umlenken der Klebemasse verwirklichen. Dies kann auch dadurch erreicht werden, daß die Zahl der Öffnungen an dieser Stelle kleiner ist als im vorderen Bereich der Dübelhülse.

Ebenfalls möglich ist es, daß die Leitschaufeln über die Länge der Dübelhülse eine unterschiedliche Größe und/oder Neigung und/oder Form aufweisen können. Auch hiermit läßt sich sowohl eine Umlenkung der Dübelmasse nach vorne als auch eine bessere Vermischung der einzelnen aus den Öffnungen austretenden Stränge erreichen.

In Weiterbildung kann vorgesehen sein, daß die mit den Leitschaufeln versehenen Öffnungen in Reihen angeordnet sind, die längs eines Umfangs verlaufen. Mit anderen Worten können die Öffnungen einer Reihe in einer senkrecht zur Längsachse des Dübels verlaufenden Ebene liegen.

Es kann vorgesehen sein, daß benachbarte Öffnungen, insbesondere die Öffnungen benachbarter in den genannten Ebenen liegender Reihen um jeweils einen halben Lochabstand zueinander versetzt angeordnet sind.

Erfindungsgemäß kann vorgesehen sein, daß die Leitschaufeln, insbesondere die Leitschaufeln an dem der Öffnung der Dübelhülse entgegengesetzten inneren Ende, als Reinigungseinrichtung zur Reinigung der Bohrungswand dienen. Die Leitschaufeln können soweit vorstehen, daß sie lose haftendes Material beim Einschieben des Dübels abstreifen und am Boden des Dübellochs sammeln.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine perspektivische Ansicht einer Dübelhälfte;
- Fig. 2: eine Seitenansicht einer Dübelhülse;
- Fig. 3: schematisch einen vergrößerten Teilschnitt durch eine Dübelhülse.

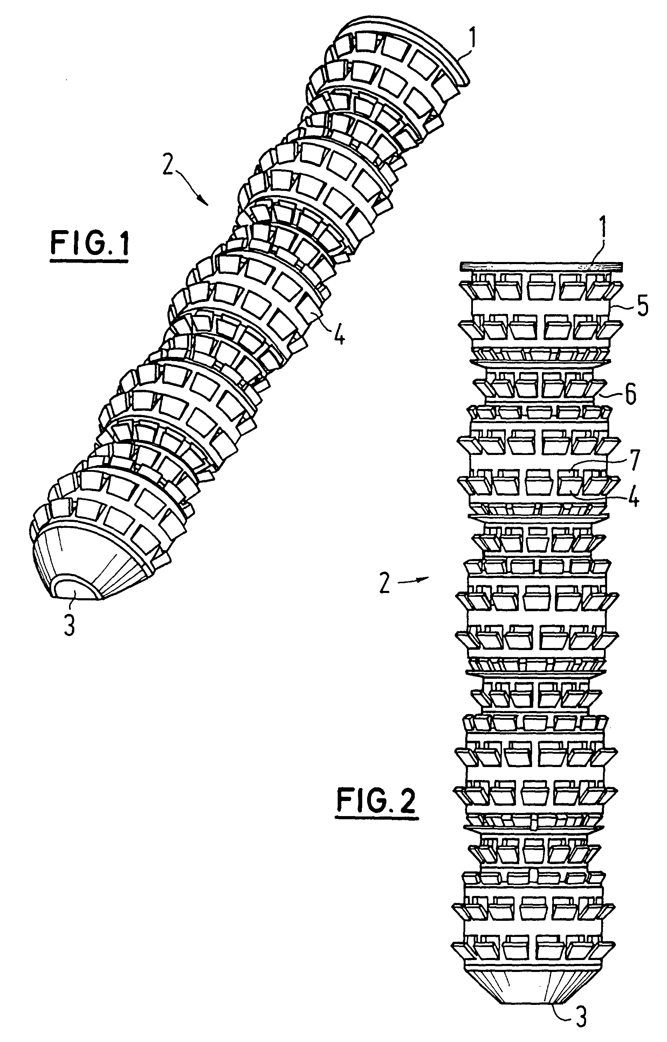

Fig. 1 zeigt perspektivisch eine Hälfte einer Dübelhülse. Dabei ist rechts oben in Fig. 1 das äußere Ende 1 der Dübelhülse 2 zu sehen, das heißt, das Ende, das an der Außenseite der Wand im Bereich der Mündung des Dübellochs angeordnet ist. Daher stellt das in Fig. 1 linke vordere Ende 3 das innere Ende der Dübelhülse 2 dar, d. h. dasjenige Ende, das im Bereich des Bodens des Dübellochs angeordnet ist. Wie man der Fig. 1 entnehmen kann, enthält die Dübelhülse eine Vielzahl von Öffnungen und im Bereich der Öffnungen angeordneten Leitschaufeln 4, die so orientiert sind, daß die aus den Öffnungen austretende Dübelmasse von den Leitschaufeln 4 in Richtung auf das vordere Ende 1 der Dübelhülse 2 umgeleitet wird, d. h. vom Boden des Bohrlochs weg.

Fig. 2 zeigt eine Seitenansicht der Dübelhülse 2 etwa in der gleichen Orientierung, wobei hier zu sehen ist, daß die Dübelhülse abwechselnde Ringbereiche 5 größeren Durchmessers und Ringbereiche 6 kleineren Durchmessers aufweist. Die Ringbereiche 5 größeren Durchmessers bilden Vorsprünge, und die Ringbereiche 6 kleineren Durchmessers bilden Rücksprünge an der Außenseite der Dübelhülse 2. An der Innenseite ist dies gerade umgekehrt.

Aus der Fig. 2 ist zu sehen, daß die Öffnungen 7 einen rechteckigen Querschnitt aufweisen und daß auch die Leitschaufeln 4 den gleichen rechteckigen Querschnitt aufweisen. Die Leitschaufeln 4 sind jeweils an der Hinterkante jeder Öffnung 7 angeformt, wobei unter hinterer Kante die Kante der Öffnung 7 zu verstehen ist, die näher an dem dem Boden des Dübellochs zugeordneten Ende 3 der Dübelhülse 2 liegt.

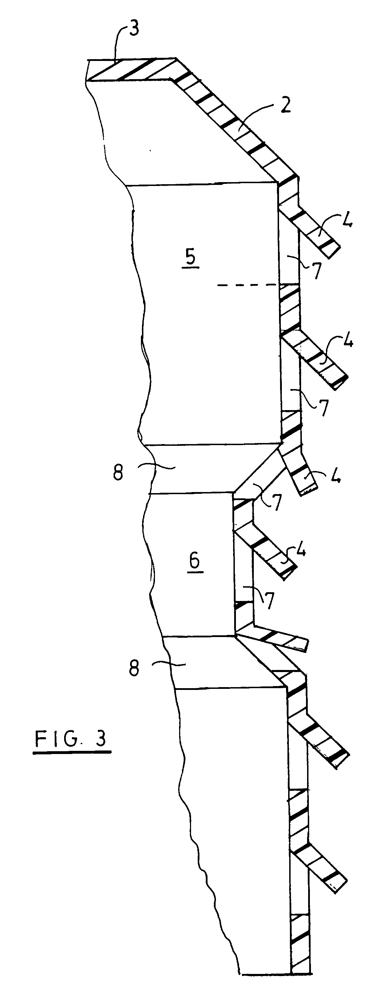

Fig. 3 zeigt in einem Längsschnitt schematisch die Anordnung der Leitschaufeln 4 hinter jeder Öffnung 7. Die Dübelhülse besteht aus zwei Hälften, siehe Fig. 1, die jeweils einstükkig aus Kunststoff gespritzt und dann miteinander verbunden sind. Zur Bildung der Öffnungen 7 sind die entsprechenden Teile der Wand der Dübelhülse nach außen verformt, etwa unter einem Winkel von 45°, und bilden dadurch die Leitschaufeln 4. Auch in den kegeligen Bereichen 8, die die Ringbereiche 5 größeren Durchmessers und die Ringbereiche 6 kleineren Durchmessers miteinander verbinden, sind Durchtrittsöffnungen 7 angeordnet, die ebenfalls mit Leitschaufeln 4 versehen sind.

Während bei dem dargestellten Ausführungsbeispiel die Größe der Öffnungen 7 und der Leitschaufeln 4 über die Länge der Dübelhülse 2 gleich sind, ist es ebenfalls möglich, die Größe der Öffnungen 7 unterschiedlich zu gestalten. Es wird daher möglich, auch auf diese Weise die Verteilung der aus der Dübelhülse 2 nach außen tretenden Masse gezielt zu steuern. Beispielsweise ist es möglich, an dem tief im Bohrloch sitzenden inneren Ende 3 der Dübelhülse 2 die Öffnungen 7 kleiner zu machen, oder auch weniger Öffnungen pro Fläche vorzusehen, damit dort weniger Dübelmasse austreten kann als in dem vorderen Bereich.

Ebenfalls möglich ist es, die Größe und Form der Leitschaufeln 4 so zu gestalten, daß im inneren Bereich eine stärkere Umlenkung nach vorne erfolgt, während beispielsweise in dem Bereich unmittelbar am äußeren Ende der Dübelhülse eine Umlenkung nur senkrecht zur Längsachse der Dübelhülse 2 erfolgt.

## Patentansprüche

1. Dübel mit
1.1 einer Dübelhülse (2), die
1.1.1 zur Aufnahme einer aushärtenden Masse bestimmt ist und
1.1.2 in einem Dübelloch durch die ausgehärtete Masse verankert wird, sowie mit
1.2 einem Verankerungselement, das
1.2.1 zum Einsetzen in die Dübelhülse (2) bestimmt ist und
1.2.2 in dieser durch die ausgehärtete Masse verankert wird, wobei
1.3 die Dübelhülse (2) Öffnungen (7) aufweist,
1.3.1 durch die die Masse nach außen gelangen kann, sowie mit
1.4 schräg gegenüber der Längsachse der Dübelhülse (2) verlaufenden Leitmitteln, um die durch die Öffnungen (7) austretende Masse in Richtung von dem Boden des Dübellochs weg zu leiten, **dadurch gekennzeichnet**, dass die Leitmittel an der hinteren Seite der Öffnungen (7) der Dübelhülse (2) angeformte einzelne Leitschaufeln aufweisen.

2. Dübel nach Anspruch 1, bei dem die Leitschaufeln (4) über die Außenseite der Dübelhülse (2) vorstehen.

3. Dübel nach einem der vorhergehenden Ansprüche, bei dem die Öffnungen (7) der Dübelhülse (2) rechteckig im Querschnitt sind.

4. Dübel nach einem der vorhergehenden Ansprüche, bei dem die Dübelhülse (2) aus Kunststoff besteht und an ihrer Außenseite Vorsprünge und Rücksprünge und an ihrer Innenseite Rücksprünge und Vorsprünge aufweist.

5. Dübel nach Anspruch 5, bei dem der Übergang zwischen den die Vorsprünge bildenden Ringbereichen (5) und den die Rücksprünge bildenden Ringbereichen (6) kegelförmig ausgebildet ist.

6. Dübel nach Anspruch 5, bei dem die Kegelbereiche mit Öffnungen (7) versehen sind.

7. Dübel nach einem der vorhergehenden Ansprüche, bei dem die Öffnungen (7) unterschiedlich groß sind.

8. Dübel nach einem der vorhergehenden Ansprüche, bei dem die Zahl der Öffnungen pro Flächeneinheit der Dübelhülse (2) unterschiedlich groß ist.

9. Dübelhülse nach einem der vorhergehenden Ansprüche, bei dem die Leitschaufeln (4) unterschiedlich groß und/oder unterschiedlich stark geneigt und/oder unterschiedlich geformt sind.

10. Dübelhülse nach einem der vorhergehenden Ansprüche, bei dem die Öffnungen (7) in Reihen angeordnet sind, die längs eines Umfangs um den Dübel verlaufen.

11. Dübel nach Anspruch 10, bei dem die Öffnungen benachbarter Reihen um jeweils einen halben Lochabstand zueinander versetzt angeordnet sind.

12. Dübel nach einem der vorhergehenden Ansprüche, bei dem die Leitschaufeln (4) eine Reinigung der Bohrungswand bewirken.

## Claims

1. Dowel having
1.1 a dowel sleeve (2), which
1.1.1 serves to receive a hardening material and
1.1.2 is anchored in a dowel hole by the hardened material, as well as having
1.2 an anchoring element
1.2.1 intended for insertion in the dowel sleeve (2) and
1.2.2 being anchored in the latter by the hardened material, in which
1.3 the dowel sleeve (2) has openings (7),
1.3.1 through which the material can pass outwards and with
1.4 guide means passing in inclined manner with respect to the longitudinal axis of the dowel sleeve (2) in order to divert the material passing out of the openings (7) in a direction away from the bottom of the dowel hole, **characterized in that** the guide means have individual guide vanes shaped onto the rear side of the openings (7) of the dowel sleeve (2).

2. Dowel according to claim 1, wherein the guide vanes (4) project over the outside of the dowel sleeve (2).

3. Dowel according to one of the preceding claims, wherein the openings (7) of the dowel sleeve (2) are rectangular in cross-section.

4. Dowel according to one of the preceding claims, wherein the dowel sleeve (2) is made from plastic and on its outside has projections and recesses and on its inside recesses and projections.

5. Dowel according to claim 4, wherein the transition between the annular areas (5) forming the projections and the annular areas (6) forming the recesses is conical.

6. Dowel according to claim 5, wherein the conical areas are provided with openings (7).

7. Dowel according to one of the preceding claims, wherein the openings (7) are of different sizes.

8. Dowel according to one of the preceding claims, wherein the number of openings per surface unit of the dowel sleeve (2) differs.

9. Dowel sleeve according to one of the preceding claims, wherein the guide vanes (4) are of different size and/or differently inclined and/or differently shaped.

10. Dowel sleeve according to one of the preceding claims, wherein the openings (7) are arranged in rows, which pass along a circumference around the dowel.

11. Dowel according to claim 10, wherein the openings of adjacent rows are mutually displaced by in each case half a hole separation.

12. Dowel according to one of the preceding claims, wherein the guide vanes (4) clean the borehole wall.

## Revendications

1. Cheville comprenant
1.1 un manchon à cheville (2) qui est
1.1.1 destiné à recevoir une masse durcissante et
1.1.2 qui est ancré dans un trou de cheville par la masse durcissante, ainsi
1.2. ainsi qu'un élément d'ancrage qui
1.2.1 est destiné à être introduit dans le manchon de cheville (2) et
1.2. a être ancré dans celui-ci par la masse d'ancrage,
1.3 le manchon de cheville (2) présentant des ouvertures (7),
1.3.1 à travers lesquelles la masse peut parvenir vers l'extérieur et comprenant également
1.4 des moyens conducteurs s'étendant de manière inclinée par rapport à l'axe longitudinal du manchon de cheville (2), pour diriger la masse sortant des ouvertures (7) en direction du fond du trou de cheville, **caractérisé en ce que** les moyens conducteurs présentent des ailettes directrices moulées sur la face arrière des ouvertures (7) du manchon de cheville (2).

2. Cheville selon la revendication 1, où les ailettes directrices (4) font saillie au-dessus de la face externe du manchon de cheville (2).

3. Cheville selon l'une des revendications précédentes, où les ouvertures (7) du manchon de cheville (2) ont une section transversale rectangulaire.

4. Cheville selon l'une des revendications précédentes, où le manchon de cheville (2) se compose de matière synthétique et présente sur sa face externe des saillies et des cavités et sur sa face interne des cavités et des saillies.

5. Cheville selon la revendication 5, où la transition entre les zones annulaires (5) formant les saillies et les zones annulaires (6) formant les cavités sont de forme tronconique.

6. Cheville selon la revendication 5, où les zones coniques sont munies d'ouvertures (7).

7. Cheville selon l'une des revendications précédentes, où les ouvertures (7) sont de dimensions différentes.

8. Cheville selon l'une des revendications précédentes, où le nombre des ouvertures est différent par unité de surface du manchon de cheville.

9. Cheville selon l'une des revendications précédentes, où les ailettes directrices (4) sont de tailles différentes et/ou sont fortement inclinées de manière différente et/ou ont une forme différente.

10. Cheville selon l'une des revendications précédentes, où les ouvertures (7) sont disposées en rangée qui s'étendent le long de d'une périphérie autour de la cheville.

11. Cheville selon la revendication 10, où les ouvertures de rangées voisines sont disposées décalées entre elles respectivement d'un demi-écart de trou.

12. Cheville selon l'une des revendications précédentes, où les ailettes directrices (4) provoquent un nettoyage de la paroi de perçage.
